# EUROPÄISCHE PATENTSCHRIFT

(11) **EP 3 464 937 B1**
(45) Veröffentlichungstag und Bekanntmachung des Hinweises auf die Patenterteilung: **17.06.2020**
(21) Anmeldenummer: 17710204.3
(22) Anmeldetag: 09.03.2017
(51) Int. Cl.: F16G 5/08, F16G 5/20, F16G 5/22

(54) **KEILRIEMEN UND VERFAHREN ZU SEINER HERSTELLUNG**
V-BELT AND METHOD FOR THE PRODUCTION THEREOF
COURROIE TRAPÉZOÏDALE ET SON PROCÉDÉ DE FABRICATION

(30) Priorität: 02.06.2016 DE 102016209633
(43) Veröffentlichungstag der Anmeldung: 10.04.2019
(73) Patentinhaber: ContiTech Antriebssysteme GmbH, 30165 Hannover (DE)
(72) Erfinder: SATTLER, Heiko, 30900 Wedemark (DE); BARTSCH-KUSZEWSKI, Dirk, 30966 Hemmingen (DE)
(74) Vertreter: Kilsch, Armin Ralph
(86) Internationale Anmeldenummer: PCT/EP2017/055558
(87) Internationale Veröffentlichungsnummer: WO 2017/207123

(56) Entgegenhaltungen:
- WO-A1-2015/122113
- DE-A1- 10 204 092
- JP-A- H01 127 263
- JP-A- 2007 040 314

## Beschreibung

Die Erfindung betrifft ein Verfahren zur Herstellung eines Keilriemens oder eines Verbundkeilriemens und eine Verwendung solcher Keilriemen oder Verbundkeilriemen gemäß Ansprüchen 1 und 7.

Vornehmlich für leistungsstarke Keilriemenantriebe im Bereich der Landwirtschaft werden mit Gewebe ummantelte Einzelkeilriemen oder Verbundkeilriemen mit Schmalkeilriemenprofilen (SPA, SPB, SPC) und mit klassischen Keilriemenprofile A - E gemäß DIN 7753 bzw. DIN 2215 eingesetzt. Gründe hierfür sind deren Unempfindlichkeit gegen Umgebungseinflüsse und deren Fähigkeit, auch im gelegentlichen Überlastbetrieb schadlos einsetzbar zu sein. Sowohl mit Gewebe ummantelte Einzelkeilriemen als auch die einzelnen Teilriemen in Verbundkeilriemen bestehen aus einem Kern mit Mischung und Cord und dem Ummantelungsgewebe.

Die Herstellung solcher Keilriemen erfolgt üblicherweise so, dass auf einer Aufbautrommel Gummilagen und Festigkeitsträger (Corde) zu einer Art dickem schlauchförmigem Wickelkörper aufgewickelt werden, von dem danach einzelne im Querschnitt rechteckige Ringe abgeschnitten werden. Diese so genannten Kemrohlinge werden einzeln und vollständig mit Gewebe ummantelt, in Keilform gepresst und dann vulkanisiert. Durch solche Herstellungsverfahren werden nahezu alle üblichen Schmalkeilriemenprofile (SPA, SPB, SPC) und alle klassischen Keilriemenprofile A - E gemäß DIN 7753 bzw. DIN 2215 hergestellt.

Daneben sind im Stand der Technik weitere Arten der Herstellung offenbart, beispielsweise durch die WO2015-122113A1, in der ein Verfahren zum Herstellen eines Kraftübertragungsriemen beschrieben ist, bei dem zuerst eine Endlos-Zugträgerschicht vulkanisiert und danach letztere mit einer Presskautschukschicht verbunden wird..

Die DE 102 04 092 A1 beschreibt eine Kautschukzusammensetzung und auch ein Verfahren zur Herstellung eines Transmissionsriemens, bei dem zunächst ein vulkanisierter und geformter Wickel hergestellt und danach mit weiteren Lagen belegt wird.

Bei der Herstellung von Verbundkeilriemen, also Antriebsriemen, bei dem mehrere nebeneinanderliegende einzelne Keilriemen miteinander verbunden werden, werden ebenfalls zunächst einzelne Kemrohlinge hergestellt, die dann durch eine Decklage aus Gummi-Mischung und Deckgewebe miteinander verbunden werden.

Die Ummantelung der einzelnen Kemrohlinge mit Gewebe ist jedoch schwierig, da die Handhabung der relativ schmalen Kemrohlinge recht kompliziert ist und das Aufbringen des Gewebes eine besonders gute Haftung des noch nicht vulkanisierten Kemrohlings zum Ummantelungsgewebe erfordert. Eine solche ausreichend gute Haftung ist besonders bei Gummimischungen aus Ethylen-Propylen-Dien-Kautschuk (EPDM) oder auch aus hydriertem Acrylnitrilbutadien-Kautschuk (H-NBR) regelmäßig aufgrund der Polymerstruktur dieser Werkstoffe nicht gegeben. Dies führt dazu, dass solche einzelnen Keilriemen oder auch Verbundkeilriemen derzeit nur aus Werkstoffen angeboten werden, deren Mischungen eine ausreichende Klebrigkeit bzw. gute Haftung aufweisen. Dies sind in aller Regel Werkstoffe, die auf Naturkautschuk (NR), Butadien-Kautschuk (BR), StyrolButadien-Kautschuk (SBR) und Chloropren-Kautschuk (CR) aufgebaut sind. Nachteilig bei diesen Werkstoffen ist es aber, dass deren Temperaturbeständigkeit nur bis zu ca. 80 °C gewährleistet ist. Bei dauerhaft höheren Temperaturen können Alterung und Versprödung dieser Gummimischungen relativ früh einsetzen. Gelegentlicher Überlastbetrieb oder Einsatz in rauen Umgebungen ist dann nur noch sehr bedingt möglich.

Für die Erfindung bestand daher die Aufgabe, einen mit Gewebe ummantelten Keilriemen für Riementriebe hoher Leistungen bereitzustellen, der auch bei hohen Temperaturen über 80° C im Dauerlastbetrieb einsetzbar ist, der tolerant auf Lastspitzen oder kurzzeitige Überlastungen reagiert, der einfach herzustellen ist und der sich auch zur Anpassung/Erhöhung der Übertragungsleistung leicht zu Verbundkeilriemen komplettieren lässt.

Gelöst wird diese Aufgabe durch die Merkmale des Anspruchs 1. Weitere vorteilhafte Ausbildungen sind in den Unteransprüchen offenbart. Ebenfalls ist eine vorteilhafte Verwendung für solche Keilriemen offenbart.

Dabei besteht der erfindungsgemäße Keilriemen aus elastomerem Material aus zwei miteinander verbundenen jeweils ringförmigen Teilen, nämlich Keilriemenunterbau und Keilriemenrücken, und ist als Keilriemenverbund aus zwei einzeln konfektionierten und zusammenvulkanisierten Teilrohlingen hergestellt, nämlich einem ersten als gewickelter Keilriemenunterbau ausgebildeten und das Riemenprofil aufweisenden Teilrohling und einem zweiten als gewickelter Keilriemenrücken ausgebildeten nicht profilierten Teilrohling. Der Keilriemen weist ein oder mehrere Lagen von Festigkeitsträger-Corden und auf seinem Riemenrücken und/oder auf seiner Profilseite ein Gewebe auf. Die in Längsrichtung des Keilriemens verlaufenden Festigkeitsträger-Corde sind im Wesentlichen radial in einer Umfangsebene im Riemenrücken und insbesondere außerhalb des aus dem ersten Teilrohling nach der Vulkanisation entstandenen und für den Eingriff in eine Riemenscheibe vorgesehenen Keilriemenunterbaus angeordnet.

Hierbei ist das Merkmal, dass der erfindungsgemäße Keilriemen aus zwei Teilrohlingen hergestellt ist, tatsächlich ein gegenständliches Merkmal und erscheint nur vordergründig und auf den ersten Blick als ein Verfahrensmerkmal. Diese Zweiteilung des Keilriemens schon "in statu nascendi" sorgt nämlich dafür, dass die notwendigen Verformungsschritte für die Erstellung des erforderlichen Profils nur bei einem der Teilrohlinge durchgeführt werden müssen und daher die Festigkeitsträger sich in der Mischungs-Matrix nicht ungünstig verschieben können.

Bei der üblicherweise im Stand der Technik verwendeten Verformung von Einzelsträngen, die bereits alle Elemente des Keilriemens enthalten, werden nämlich die Festigkeitsträger in ihrer Lage innerhalb des Rohlings beeinflusst und können sich aus einer stabilen Cordlage so verschieben, dass die Zugfestigkeit des Keilriemens stark beeinflusst wird. Durch solchermaßen im Keilriemen verschobene Corde entsteht unter Belastung eine ungünstige Lastverteilung bzw. Scherkraft-Verteilung. Dadurch sind Nachteile bei auch nur kurzzeitiger Überlastung zu erwarten. Die erfindungsgemäßen Keilriemen weisen diese Nachteile jedoch nicht auf, weil die Lage der Festigkeitsträger durch Herstellungsprozesse nicht verändert werden kann. Im Zusammenspiel mit dem Merkmal, dass die Festigkeitsträger-Corde im Wesentlichen radial in einer Umfangsebene im Riemenrücken und insbesondere außerhalb des in die Riemenscheibe eingreifenden Keilriemenunterbaus angeordnet sind, wird die erreichbare Leistung/Leistungsdichte deutlich erhöht.

Weiterhin ist es für das Verständnis der Erfindung wichtig, die hier verwendeten Begriffe "Keilriemenverbund" und "Verbundkeilriemen" zu unterscheiden. Mit dem Begriff "Keilriemenverbund" ist im Rahmen dieser Erfindung ein Gebilde gemeint, dass aus einer beliebigen Anzahl von nebeneinanderliegenden und gemeinsam bearbeitbaren Keilriemenprofilen gebildet ist. Der Begriff "Keilriemenverbund" weist in diesem Falle daraufhin, dass ein Keilriemen nicht als einzelnes Element hergestellt wird, sondern im Verbund einer Vielzahl von Einzelelementen, d.h. einzelnen Keilriemen(profilen).

Als "Verbundkeilriemen" wird hier dagegen eine besondere Ausführung eines fertigen/fertig hergestellten Keilriemens bezeichnet, bei dem mehrere einzelne Keilriemen bzw. Keilriemenprofile nebeneinander zu einem Antriebsriemen miteinander verbunden sind und auch im Riementrieb als ein einziges Übertragungselement/als ein einziger Antriebsriemen verwendet werden. In der Regel besteht ein Verbundkeilriemen aus zwei oder drei nebeneinanderliegender Keilriemen/Keilriemenprofilen. Somit können aus einem "Keilriemenverbund" nach dessen Fertigstellung mehrere "Verbundkeilriemen" geschnitten oder abgetrennt werden.

Das Merkmal, dass der erfindungsgemäße Keilriemen hier als Keilriemenverbund hergestellt ist, muss in dem oben genannten Sinne ebenfalls ein gegenständliches Merkmal angesehen werden und sorgt insbesondere im Rahmen einer vorteilhafte Weiterbildung, die darin besteht, dass der Keilriemen aus Gummimischungen aus Ethylen-Propylen-Kautschuk (EPM), Ethylen-Propylen-Dien-Kautschuk (EPDM) oder aus hydriertem Acrylnitrilbutadien-Kautschuk (H-NBR), einzeln oder gemischt besteht, dafür, dass auch mit einfachen Keilriemen oder Verbundkeilriemen ein Dauerbetrieb unter hoher Belastung und in Temperaturbereichen oberhalb von 80°C ermöglicht wird.

Bei einer solchen Herstellung im Keilriemenverbund, die üblicherweise auf größeren Trommeln und mit breiteren Rollen erfolgt, ist es möglich, dass die genannten Gummimischungen geringerer Haftung, s.o., mit Erfolg eingesetzt werden können. Bei einer solchen Herstellung im Verbund ist nämlich eine bessere Handhabbarkeit des größeren bzw. breiteren Gebildes/Keilriemenverbundes gegeben.

Eine vorteilhafte Ausbildung des erfindungsgemäßen Keilriemens entsteht insbesondere dann, wenn der Keilriemen als Verbundkeilriemen aus mindestens zwei nebeneinander angeordneten und miteinander verbundenen Keilriemen gestaltet ist, bei dem das Gewebe auf dem Riemenrücken und/oder auf der Profilseite als über die gesamte Breite des Verbundkeilriemens ununterbrochen durchgehendes Gewebe ausgebildet ist. Ein Verbundkeilriemen besteht dabei aus mindestens zwei nebeneinander angeordneten Keilriemen.

Ein Verbundkeilriemen mit einem solcherart durchgehend ausgebildeten Gewebe ist besonders widerstandsfähig in Bezug auf die von der Riemenscheibe und von Umlenkrollen übertragenen Kräfte/Reibungskräfte. Damit erreicht man eine weitaus höhere Belastbarkeit als bei Verbundkeilriemen im Stand der Technik, bei denen, wie oben bereits dargestellt, einzelne Kernrohlinge nachträglich durch eine Decklage aus Gummi-Mischung und Deckgewebe miteinander verbunden werden.

Die vorliegende Erfindung befasst sich mit einem Verfahren zur Herstellung eines Keilriemens oder eines Verbundkeilriemens bei dem ein Keilriemenverbund mehrerer nebeneinanderliegender Keilriemen aus einem Verbundkeilriemen-Rohling bzw.

Verbundkörper-Rohling mit den Verfahrensschritten hergestellt wird, wie sie im Anspruch 1 offenbart sind. Der Verbundkörper-Rohling wird dabei aus zwei Teilrohlingen in Form von gewickelten zylindrischen Körpern hergestellt wird, nämlich einem ersten als gewickelter Keilriemenunterbau ausgebildeten Teilrohling und einem zweiten als gewickelter Keilriemenrücken ausgebildeten Teilrohling.

Dabei wird zunächst bzw. separat der erste Teilrohling aus einer Gummimischung und einem Gewebe hergestellt, nämlich der als gewickelter Keilriemenunterbau ausgebildete Teilrohling.

Dazu werden ein oder mehrere unvulkanisierte Lagen von Gummi auf einer flachen Aufbautrommel aufgewickelt, bis eine Gummischicht mit einer für den Keilriemenunterbau vorbestimmten Dicke auf der Aufbautrommel aufgebracht ist. Danach werden ein oder mehrere Lagen von Gewebe auf die Gummischicht aufgewickelt.

Der so entstandene Schichtverbund von Gummischicht und Gewebelagen wird dann mit einer komplementär zum Keilriemenprofil ausgebildeten bzw. profilierten Formrolle, einer so genannten "Gegenrolle" auf der Aufbautrommel in mehrere nebeneinanderliegende Keilriemenprofile geformt. Da in diesem ersten Teilrohling keine Festigkeitsträger-Corde vorhanden sind, können diese auch nicht bei der Formung des Keilriemenprofils in ungünstiger Weise innerhalb der Gummi-Matrix verschoben werden. Die Festigkeitsträger-Corde befinden sich nämlich in dem zweiten Teilrohling, der in separaten Fertigungsschritten hergestellt wird.

Hierzu wird separat der zweite als gewickelter Keilriemenrücken ausgebildete Teilrohling aus einer Gummimischung, aus einem Festigkeitsträger-Cord und einem Rückengewebe hergestellt.

Dabei werden ein oder mehrere unvulkanisierte Lagen von Gummi auf einer flachen Aufbautrommel aufgewickelt, danach werden ein oder mehrere Lagen von Festigkeitsträger-Corden aufgewickelt, dann wiederum ein oder mehrere weitere unvulkanisierte Lagen von Gummi, bis eine mit Festigkeitsträgern verstärkte Gummischicht mit einer für den Keilriemenrücken vorbestimmten Dicke auf der Aufbautrommel aufgebracht ist.

Letztlich werden ein oder mehrere Lagen von Rückengewebe auf die mit Festigkeitsträgern versehene Gummischicht aufgewickelt und der so entstandene, den zweiten Teilrohling bildende Schichtverbund mit einer flachen Formrolle auf der Aufbautrommel verpresst.

Nun sind beide Teilrohlinge fertig gestellt und müssen miteinander verbunden werden. Dazu wird der in Rückenlage hergestellte erste Teilrohling von seiner Aufbautrommel heruntergeschnitten, gewendet bzw. umgekrempelt und mit innenliegendem Profil mit einem den Schnittbereich umfassenden Gummistreifen zu einem Ring verklebt. Nach dieser Aktion befindet sich der erste Teilrohling somit in "Lauflage".

Dann wird der - nach dem Wenden/Krempeln und Verbinden der Enden - in Lauflage befindliche erste Teilrohling um zwei auseinanderfahrbare und mit komplementärem Außenprofil versehene Vulkanisationstrommeln so positioniert, dass er beide Vulkanisationstrommeln umschließt und auf Teilen ihres Umfangs anliegt.

Der ebenfalls fertig gestellte Schichtverbund des zweiten Teilrohlings, also des Rückenverbunds wird nun über den bereits auf den verfahrbaren Vulkanisationstrommeln positionierten und letztere umschließenden ersten Teilrohling geschoben und auch dort positioniert. Der zweite Teilrohling ist, wie oben ersichtlich, bereits in Lauflage hergestellt und braucht deshalb nicht gekrempelt zu werden.

Danach werden die Vulkanisationstrommeln auseinandergefahren und die beiden Teilrohlinge werden auf den Vulkanisationstrommeln umlaufend unter einem anliegenden Druckband miteinander zum Keilriemenverbund vulkanisiert.

Nach der Vulkanisation erfolgt eine Vereinzelung des Keilriemenverbunds in einzelne Keilriemen oder Verbundkeilriemen, wobei letztere aus mindestens zwei nebeneinander angeordneten Keilriemen bzw. Keilriemenprofilen bestehen.

Eine weitere vorteilhafte Ausbildung des Verfahrens besteht darin, dass bei der Herstellung des ersten Teilrohlings das Keilriemenprofil bzw. die profilierte Formrolle (Gegenrolle) so ausgebildet sind, dass der Abstand "e" der Mittellinien zweier nebeneinanderliegender Keilprofile größer ist als 10 mm. Damit lassen sich Profile herstellen, die jenseits der "schwersten" Keilrippenprofile PM nach ISO 9982 / DIN 7867 einzuordnen sind.

Eine weitere vorteilhafte Ausbildung des Verfahrens besteht darin, dass bei der Herstellung des ersten Teilrohlings die unvulkanisierten Gummilagen unter Wärmeeinwirkung auf die Aufbautrommel gewickelt werden. Dies sichert einen guten und blasenfreien Verbund und erleichtert die exakte Positionierung.

Eine weitere vorteilhafte Ausbildung des Verfahrens besteht darin, dass die Gummilagen maximal 1,5 mm dick sind. Dies unterstützt noch einmal die Vorteile, die mit der Erwärmung der Gummilagen erreichbar sind.

Die genannten Vorteile ergeben sich natürlich auch bei einer weiteren vorteilhaften Ausbildung des Verfahrens, die darin besteht, dass auch bei der Herstellung des zweiten Teilrohlings der Schichtverbund des zweiten Teilrohlings unter Wärmeeinwirkung auf der Aufbautrommel aufgewickelt und/oder verpresst wird.

Eine weitere vorteilhafte Ausbildung des Verfahrens besteht darin, dass nach der Vereinzelung des Keilriemenverbunds in einzelne Keilriemen oder Verbundkeilriemen eine chemische Versiegelung der Schnittkanten erfolgt, insbesondere durch Aufbringen von Isocyanat. Hierdurch erreicht man beispielsweise eine gute Kantenversiegelung gegen Quellung der Keilriemen unter/in Öl, insbesondere wenn eine EPDM-Mischung verwendet wird. Gleichermaßen wird auch eine mechanische Stabilisierung des Anschnitts der Corde erreicht, der ja bei der Trennung des fertig vulkanisierten Keilriemenverbunds in Einzelkeilriemen/Verbundkeilriemen immer entsteht.

Noch einmal zusammengefasst besteht das Verfahren also darin, dass ein Rohlingswickel aus zwei Teilwickeln hergestellt wird, wobei der Riemenunterbau aus Gummimischung und Gewebe gebildet und vorgeformt wird, ohne dass das Umformen auch die Festigkeitsträger betrifft. Die Gummimischung wird dazu auf einer flachen Trommel in Rückenlage vorzugsweise aus dünnen Einzellagen unter Wärmeeinwirkung gewickelt und außen mit einer oder mehreren Lagen Gewebe versehen. Anschließend wird mit einer profilierten Gegenrolle vorgeformt und dieser Teilrohling von der Trommel heruntergeschnitten.

Der Riemenrücken mit den Festigkeitsträger-Corden wird in Ziellänge, aber in Lauflage und ebenfalls auf einer flachen Trommel aus der Mischung, Cord, weiterer Mischung und Rückengewebe aufgebaut und mit einer glatten Rolle möglichst unter Wärmeeinwirkung verpresst.

Auf der aus zwei gegeneinander verfahrbaren Vulkanisationstrommeln bestehenden Vulkanisationseinrichtung wird der Unterbau nun in Lauflage gewendet aufgelegt und mit einem Gummistreifen verschlossen. Im nächsten Schritt wird der Rückenverbund über den Unterbau übergeschoben. Die Vulkanisationstrommeln werden zur Vulkanisation auseinandergefahren, um bei drehenden Trommeln Unterbau und Rücken unter Druck zusammen zu heizen. Abschließend wird der erhaltene Wickel in Einzelriemen oder Verbundriemen gewünschter Teilriemenzahl vereinzelt.

Die erfindungsgemäßen Keilriemen oder Verbundkeilriemen eignen sich in besonderer Weise zur Verwendung in landwirtschaftlichen Fahrzeugen oder Arbeitsmaschinen. Bei solchen Einsätzen ist es, wie oben bereits dargestellt, leicht möglich, dass durch schweres Gelände oder plötzlich auftretende Hindernisse immer wieder eine nicht vorhersehbare Überlastung von Antriebsriemen entsteht. Bei der Verwendung der erfindungsgemäßen Riemen ist dies relativ unproblematisch.

Anhand eines Ausführungsbeispiels und in Skizzen zur Herstellung soll die Erfindung näher erläutert werden. Es zeigen
- Fig. 1: einen erfindungsgemäßen Verbundkeilriemen im Querschnitt
- Fig. 2: die Herstellung des ersten Teilrohlings, der im fertigen Riemen den Keilriemenunterbau bildet, aus einer Gummimischung und einem Gewebe, in Form einer Prinzipskizze,
- Fig. 3: die Herstellung des zweiten Teilrohlings, der im fertigen Riemen den Keilriemenrücken bildet, aus einer Gummimischung, einem Festigkeitsträger-Cord und einem Rückengewebe, in Form einer Prinzipskizze,
- Fig. 4: prinzipiell den weiteren Verlauf des Herstellverfahrens zur weiteren Bearbeitung und Vulkanisation der beiden Rohlinge.

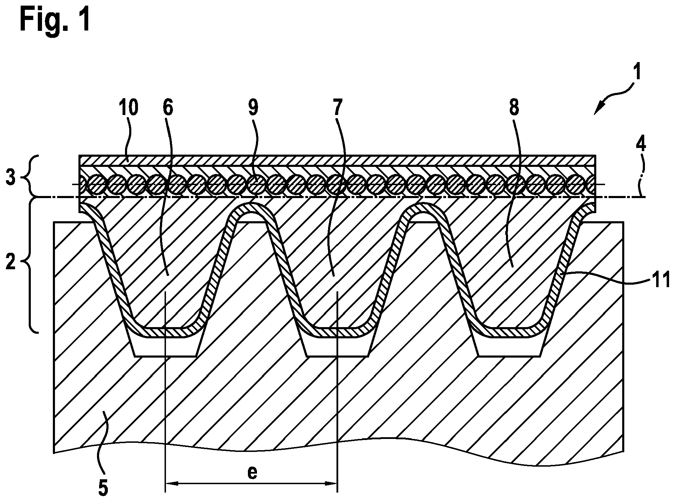

Fig. 1 zeigt einen erfindungsgemäßen Verbundkeilriemen 1 im Querschnitt auf einer komplementären Riemenscheibe 5. Der Keilriemen 1 besteht aus einem Keilriemenunterbau 2 und einem Keilriemenrücken 3.

Beide Teile sind in der Figur 1 durch die strichpunktierten Trennlinie 4 ausgewiesen. An dieser Trennlinie stoßen die beiden miteinander verbundenen jeweils ringförmigen Teile, Keilriemenunterbau und Keilriemenrücken, aneinander. Realiter ist natürlich im hier dargestellten fertigen Zustand keine Trennlinie mehr vorhanden oder zu erkennen, da durch die Vulkanisation beide ringförmigen Teile vollständig miteinander verbunden sind. Dass zwei Teile vorhanden waren, erkennt man allerdings an der Position der Festigkeitsträger-Corde in exakt derselben Ebene im Rückenaufbau außerhalb des Scheibeneingriffs.

Der Verbundkeilriemen 1 besteht hier aus drei nebeneinander angeordneten und miteinander verbundenen Keilriemenprofilen 6, 7 und 8. Der Abstand "e" der Mittellinien zweier nebeneinander liegender Keilriemenprofile beträgt hier 12 mm.

Der Verbundkeilriemen weist eine Lage von Festigkeitsträger-Corden 9 auf, die radial in einer Umfangsebene im Riemenrücken 3 und außerhalb des Keilriemenunterbaus 2 angeordnet sind. Mangels ungünstiger Beeinträchtigungen durch vorhergehende Verformung bei der Herstellung befinden sich die Festigkeitsträger in der Mischungs-Matrix alle in einer radialen Ebene, also "wie gewickelt", und weisen keinerlei radiale Verschiebungen gegeneinander auf.

Auf seinem Riemenrücken und auf seiner Profilseite weist der Verbundkeilriemen jeweils ein Gewebe 10, 11 auf.

Der in der Figur 1 dargestellte Verbundkeilriemen ist im Übrigen nicht zu verwechseln mit einem Keilrippenriemen (KRR), der zwar auf den ersten Blick ähnlich aussieht, aber im Hinblick auf seine Tragfähigkeit, Belastung, Abmessungen, Robustheit und Einsatzbereich in eine völlig andere und auch von der Herstellung nicht zu vergleichende Kategorie von Antriebsriemen gehört.

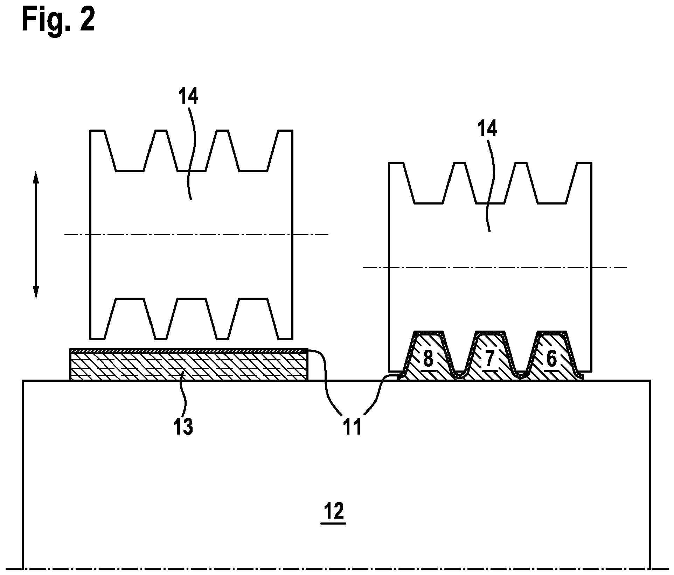

Fig. 2, 3 und 4 zeigen lediglich anhand von Prinzipskizzen in der Zusammenschau das erfindungsgemäße Herstellungsverfahren.

Fig. 2 zeigt dabei die Herstellung des ersten Teilrohlings aus einer Gummimischung und einem Gewebe, der im fertigen Riemen den Keilriemenunterbau 2 bildet. Dabei werden ein oder mehrere unvulkanisierte Lagen von Gummi auf einer flachen Aufbautrommel 12 aufgewickelt, bis eine Gummischicht 13 mit einer für den Keilriemenunterbau vorbestimmten Dicke auf der Aufbautrommel aufgebracht ist. Danach werden ein oder mehrere Lagen von Gewebe 11 auf die Gummischicht aufgewickelt. Der so entstandene Schichtverbund von Gummischicht 13 und Gewebelagen 11 wird mit einer komplementär zum Keilriemenprofil ausgebildeten bzw. profilierten Formrolle 14 (Gegenrolle) auf der Aufbautrommel 12 in mehrere nebeneinanderliegende Keilriemenprofile 6, 7 und 8 geformt.

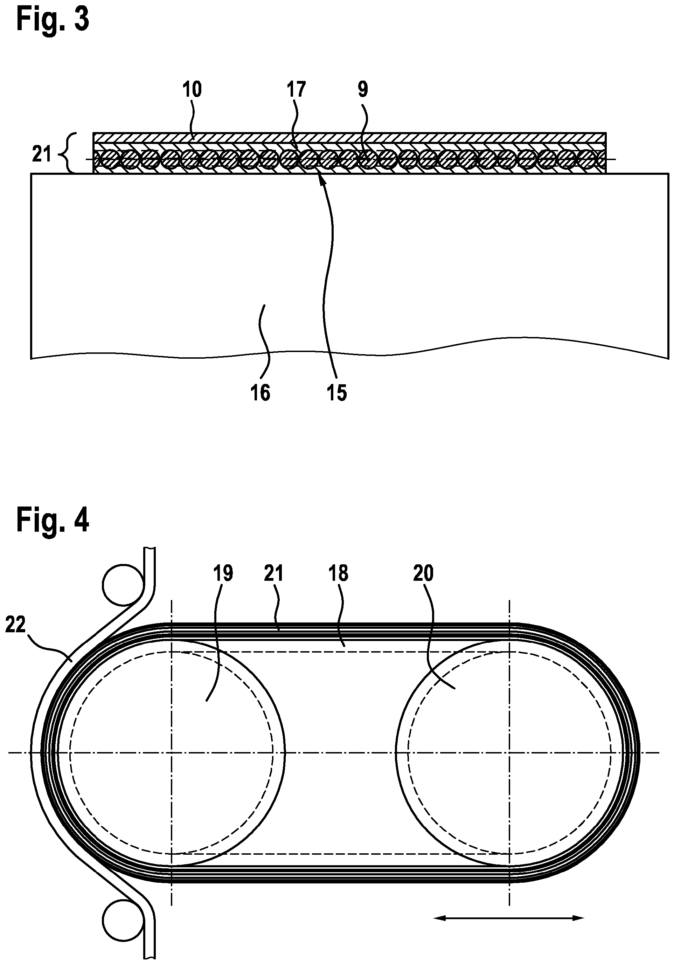

Fig. 3 zeigt dabei die Herstellung des zweiten Teilrohlings aus einer Gummimischung, aus einem Festigkeitsträger-Cord und einem Rückengewebe. Hier werden mehrere unvulkanisierte Lagen von Gummi 15 auf einer flachen Aufbautrommel 16 aufwickelt, danach ein oder mehrere Lagen von Festigkeitsträger-Corden 9 und im Folgenden wieder ein oder mehrere weitere unvulkanisierte Lagen von Gummi 17. Diese geschieht, bis eine mit Festigkeitsträgern verstärkte Gummischicht mit einer für den Keilriemenrücken vorbestimmten Dicke auf der Aufbautrommel aufgebracht ist. Dann werden ein oder mehrere Lagen von Rückengewebe 10 auf die mit Festigkeitsträgern versehene Gummischicht aufgewickelt.

Der so entstandene Schichtverbund 21 des zweiten Teilrohlings mit einer hier nicht näher dargestellten flachen Formrolle auf der Aufbautrommel verpresst.

In einem weiteren Fertigungsschritt wird der in Rückenlage auf der Aufbautrommel 12 hergestellte erste Teilrohling von der Aufbautrommel 12 heruntergeschnitten, gewendet bzw. umgekrempelt und mit innenliegendem Profil mit einem den Schnittbereich umfassenden Gummistreifen zu einem Ring 18, nämlich dem den späteren Keilriemenunterbau bildenden Teil des Keilriemens verklebt.

Fig. 4 zeigt prinzipiell den weiteren Verlauf des Herstellverfahrens. Der Ring 18 wird dabei so um zwei auseinanderfahrbare und mit komplementärem Außenprofil versehene Vulkanisationstrommeln 19 und 20 positioniert, dass er beide Vulkanisationstrommeln umschließt und auf Teilen ihres Umfangs anliegt.

Sodann wird der Schichtverbund 21 des zweiten Teilrohlings, d.h. der spätere Rückenverbund, über den bereits auf den verfahrbaren Vulkanisationstrommeln befindlichen und diese umschließenden ersten Teilrohling geschoben bzw. dort positioniert. Der erste Teilrohling ist bereits, wie oben dargestellt, als gekrempelter und in Lauflage wieder miteinander verbundener Ring 18 aufgelegt.

Danach werden die Vulkanisationstrommeln 19 und 20 auseinandergefahren und die beiden aufeinanderliegenden Teilrohlinge auf den Vulkanisationstrommeln umlaufend unter einem Druckband 22 miteinander zum Keilriemenverbund vulkanisiert.

Nach der Vulkanisation erfolgt eine Vereinzelung des Keilriemenverbunds in einzelne Keilriemen oder Verbundkeilriemen, d.h. es werden einzelne Ringe vom Keilriemenverbund abgeschnitten.

### Bezugszeichenliste

### (Teil der Beschreibung)

- 1: Verbundkeilriemen
- 2: Keilriemenunterbau
- 3: Keilriemenrücken
- 4: Theoretische Trennlinie zwischen Keilriemenunterbau und Keilriemenrücken
- 5: Riemenscheibe
- 6: Keilriemenprofil
- 7: Keilriemenprofil
- 8: Keilriemenprofil
- 9: Festigkeitsträger-Corde
- 10: Gewebe (Rückengewebe)
- 11: Gewebe (Profilgewebe)
- 12: Aufbautrommel für den Keilriemenunterbau
- 13: Gummischicht
- 14: Formrolle / Gegenrolle
- 15: Gummilagen
- 16: Aufbautrommel für den Keilriemenrücken
- 17: Gummilagen
- 18: Umgekrempelter Ring (umgekrempelter erster Rohling / Keilriemenunterbau)
- 19: Vulkanisationsrolle
- 20: Vulkanisationsrolle
- 21: Schichtverbund (Keilriemenrücken / zweiter Rohling)
- 22: Druckband

## Patentansprüche

1. Verfahren zur Herstellung eines Keilriemens oder eines Verbundkeilriemens (1), bei dem ein Keilriemenverbund mehrerer nebeneinanderliegender Keilriemen aus einem Verbundkörper-Rohling hergestellt wird, **dadurch gekennzeichnet, dass** der Verbundkörper-Rohling aus zwei Teilrohlingen in Form von gewickelten zylindrischen Körpern hergestellt wird, nämlich einem ersten als gewickelter Keilriemenunterbau (2) ausgebildeten Teilrohling und einem zweiten als gewickelter Keilriemenrücken (3) ausgebildeten Teilrohling, wobei folgende Verfahrensschritte vorgesehen sind:
a) Herstellung des ersten als gewickelter Keilriemenunterbau ausgebildeten Teilrohlings aus einer Gummimischung und einem Gewebe (11), wobei
- ein oder mehrere unvulkanisierte Lagen von Gummi auf einer flachen Aufbautrommel (12) aufwickelt werden, bis eine Gummischicht (13) mit einer für den Keilriemenunterbau (2) vorbestimmten Dicke auf der Aufbautrommel (12) aufgebracht ist,
- ein oder mehrere Lagen von Gewebe (11) auf die Gummischicht aufgewickelt werden,
- der so entstandene Schichtverbund von Gummischicht und Gewebelagen mit einer komplementär zum Keilriemenprofil ausgebildeten bzw. profilierten Formrolle (14) auf der Aufbautrommel (12) in mehrere nebeneinanderliegende Keilriemenprofile geformt wird,
b) Herstellung des zweiten als gewickelter Keilriemenrücken (3) ausgebildeten Teilrohlings aus einer Gummimischung, aus einem Festigkeitsträger-Cord (9) und einem Rückengewebe (10), wobei
- ein oder mehrere unvulkanisierte Lagen (15) von Gummi auf einer flachen Aufbautrommel (16) aufwickelt werden,
- ein oder mehrere Lagen von Festigkeitsträger-Corden (9) aufgewickelt werden,
- ein oder mehrere weitere unvulkanisierte Lagen (17) von Gummi aufwickelt werden, bis eine mit Festigkeitsträgern verstärkte Gummischicht mit einer für den Keilriemenrücken vorbestimmten Dicke auf der Aufbautrommel aufgebracht ist,
- ein oder mehrere Lagen von Rückengewebe (10) auf die mit Festigkeitsträgern versehene Gummischicht aufgewickelt werden,
- der so entstandene Schichtverbund (21) des zweiten Teilrohlings mit einer flachen Formrolle auf der Aufbautrommel verpresst wird,
c) wonach der in Rückenlage hergestellte erste Teilrohling
- von seiner Aufbautrommel (12) heruntergeschnitten, gewendet bzw. umgekrempelt und mit innenliegendem Profil mit einem den Schnittbereich umfassenden Gummistreifen zu einem Ring verklebt wird und
- um zwei auseinanderfahrbare und mit komplementärem Außenprofil versehene Vulkanisationstrommeln (19, 20) so positioniert wird, dass er beide Vulkanisationstrommeln umschließt und auf Teilen ihres Umfangs anliegt,
d) der Schichtverbund (21) des zweiten Teilrohlings über den bereits die verfahrbaren Vulkanisationstrommeln umschließenden ersten Teilrohling geschoben bzw. dort positioniert wird,
e) wonach die Vulkanisationstrommeln (19, 20) auseinandergefahren werden und die beiden Teilrohlinge auf den Vulkanisationstrommeln umlaufend unter einem Druckband (22) miteinander zum Keilriemenverbund vulkanisiert werden
f) und nach der Vulkanisation eine Vereinzelung des Keilriemenverbunds in einzelne Keilriemen oder Verbundkeilriemen aus mindestens zwei nebeneinander angeordneten Keilriemen erfolgt.

2. Verfahren nach Anspruch 1, bei dem bei der Herstellung des ersten Teilrohlings das Keilriemenprofil bzw. die profilierte Formrolle (14) so ausgebildet sind, dass der Abstand "e" der Mittellinien zweier nebeneinanderliegenden Keilprofile größer ist als 10 mm.

3. Verfahren nach Anspruch 1 oder 2, bei dem bei der Herstellung des ersten Teilrohlings die unvulkanisierten Gummilagen unter Wärmeeinwirkung auf die Aufbautrommel (12) gewickelt werden.

4. Verfahren nach Anspruch 3, bei dem die Gummilagen maximal 1,5 mm dick sind.

5. Verfahren nach einem der Ansprüche 1 bis 4, bei dem bei der Herstellung des zweiten Teilrohlings der Schichtverbund des zweiten Teilrohlings unter Wärmeeinwirkung auf der Aufbautrommel (16) aufgewickelt und/oder verpresst wird.

6. Verfahren nach einem der Ansprüche 1 bis 5, bei dem nach der Vereinzelung des Keilriemenverbunds in einzelne Keilriemen oder Verbundkeilriemen (1) eine chemische Versiegelung der Schnittkanten erfolgt, insbesondere durch Aufbringen von Isocyanat.

7. Verwendung eines Keilriemens oder Verbundkeilriemen (1) aus mindestens zwei nebeneinander angeordneten Keilriemen (6, 7, 8), hergestellt nach einem der Ansprüche 1 bis 6, bei dem das Gewebe (10, 11) auf dem Riemenrücken und/oder auf der Profilseite als über die Breite des Verbundkeilriemens ununterbrochen durchgehendes Gewebe ausgebildet ist, für Riementriebe in landwirtschaftlichen Fahrzeugen oder Arbeitsmaschinen.

## Claims

1. Method for producing a V-belt or a composite V-belt (1), wherein a V-belt composite of a plurality of V-belts lying beside one another is produced from a composite-body blank, **characterized in that** the composite-body blank is produced from two part-blanks in the form of wound cylindrical bodies, specifically from a first part-blank that is configured as a wound V-belt substructure (2) and from a second part-blank that is configured as a wound V-belt back (3), wherein the following method steps are provided:
a) producing the first part-blank that is configured as a wound V-belt substructure from a rubber mixture and a woven fabric (11), wherein
- one or a plurality of tiers of non-vulcanized rubber are wound onto a flat construction drum (12) until a rubber layer (13) having a thickness that is predetermined for the V-belt substructure (2) has been applied to the construction drum (12) ;
- one or a plurality of tiers of woven fabric (11) are wound onto the rubber layer;
- the layered composite of the rubber layer and the woven fabric tiers thus created on the construction drum (12) is shaped into a plurality of V-belt profiles that lie beside one another by way of a forming roller (14) that is configured or profiled, respectively, so as to be complementary to the V-belt profile;
b) producing the second part-blank that is configured as a wound V-belt back (3) from a rubber mixture, from a reinforcing support cord (9) and a woven backing fabric (10); wherein
- one or a plurality of non-vulcanized tiers (15) of rubber is/are wound onto a flat construction drum (16);
- one or a plurality of tiers of reinforcing support cords (9) is/are wound;
- one or a plurality of further non-vulcanized tiers (17) of rubber is/are wound until a rubber layer that is reinforced with reinforcing supports, having a thickness that is predetermined for the V-belt back, has been applied to the construction drum;
- one or a plurality of tiers of woven backing fabric (10) is/are wound onto the rubber layer that is provided with reinforcing supports;
- the layered composite (21) of the second part-blank thus created is compressed on the construction drum by way of a flat forming roller;
c) whereupon the first part-blank having been produced upside down
- is cut from its construction drum (12), turned over or inverted, respectively, and with the profile lying on the inside by way of a rubber strip that comprises the cutting region is adhesively bonded so as to form a ring; and
- is positioned about two divergible vulcanizing drums (19, 20) that are provided with a complementary external profile such that said first part-blank envelops both vulcanizing drums and bears on parts of the circumferences of said vulcanizing drums;
d) the layered composite (21) of the second part-blank is pushed over, or is positioned on, respectively, the first part-blank that already envelops the displaceable vulcanizing drums;
e) whereupon the vulcanizing drums (19, 20) are diverged and the two part-blanks on the vulcanizing drums, while revolving under a compression belt (22), are conjointly vulcanized so as to form the V-belt composite;
f) and singularizing the V-belt composite into individual V-belts or composite V-belts from at least two V-belts that are disposed beside one another is performed after the vulcanization.

2. Method according to Claim 1, wherein the V-belt profile, and the profiled forming roller (14), respectively, in the production of the first part-blank are configured such that the spacing "e" of the centerlines of two V profiles that lie beside one another is larger than 10 mm.

3. Method according to Claim 1 or 2, wherein the non-vulcanized rubber tiers in the production of the first part-blank are wound onto the construction drum (12) under the influence of heat.

4. Method according to Claim 3, wherein the rubber tiers are at most 1.5 mm thick.

5. Method according to one of Claims 1 to 4, wherein the layered composite of the second part-blank in the production of the second part-blank is wound onto the construction drum (16) and/or compressed thereon under the influence of heat.

6. Method according to one of Claims 1 to 5, wherein chemical sealing of the cutting edges is performed, in particular by applying isocyanate, after the singularization of the V-belt composite into individual V-belts or composite V-belts (1).

7. Use of a V-belt or a composite V-belt (1) from at least two V-belts (6, 7, 8) produced according to one of Claims 1 to 6 that are disposed so as to be beside one another, wherein the woven fabric (10, 11) on the belt back and/or on the profile side is configured as woven fabric that is continuous without any interruption across the width of the composite V-belt, for belt drives in agricultural vehicles or machines.

## Revendications

1. Procédé de fabrication d'une courroie trapézoïdale ou d'une courroie trapézoïdale composite (1), dans lequel un composite d'une pluralité de courroies trapézoïdales placées les unes à côté des autres est produit à partir d'une ébauche de corps composite, **caractérisé en ce que** l'ébauche de corps composite est produite à partir de deux parties d'ébauche se présentant sous la forme de corps cylindriques enroulés, à savoir une première partie d'ébauche conçue comme une sous-structure de courroie trapézoïdale enroulée (2) et une deuxième partie d'ébauche conçue comme un dos de courroie trapézoïdale enroulée (3), les étapes de procédé suivantes étant prévues :
a) fabriquer la première partie d'ébauche conçue comme une sous-structure de courroie trapézoïdale enroulée à partir d'un mélange de caoutchouc et d'un tissu (11),
- au moins une couche de caoutchouc non vulcanisée étant enroulée sur un tambour d'assemblage plat (12) jusqu'à ce qu'une couche de caoutchouc (13) d'une épaisseur prédéterminée pour la sous-structure de courroie trapézoïdale (2) soit appliquée sur le tambour d'assemblage (12),
- au moins une couche de tissu (11) étant enroulée sur la couche de caoutchouc,
- le composite de couches résultant formé de la couche de caoutchouc et de couches de tissu étant formé avec un rouleau de formage profilé ou de forme complémentaire au profilé de courroie trapézoïdale (14) sur le tambour d'assemblage (12) en plusieurs profilés de courroie trapézoïdale disposés les uns à côté des autres,
b) fabriquer la deuxième partie d'ébauche, qui est conçue comme un dos de courroie trapézoïdale enroulée (3), à partir d'un mélange de caoutchouc, d'un cordon de renforcement (9) et d'un tissu de support (10),
- au moins une couche non vulcanisée (15) de caoutchouc étant enroulée sur un tambour d'assemblage plat (16),
- au moins une couche de cordon de renforcement (9) étant enroulée,
- au moins une autre couche non vulcanisée (17) de caoutchouc étant enroulée jusqu'à ce qu'une couche de caoutchouc renforcée avec des éléments de renforcement et ayant une épaisseur prédéterminée pour le dos de la courroie trapézoïdale soit appliquée sur le tambour d'assemblage,
- au moins une couche de tissu de support (10) étant enroulée sur la couche de caoutchouc pourvue d'éléments de renforcement,
- le composite de couches résultant (21) de la deuxième partie d'ébauche étant pressé sur le tambour d'assemblage avec un rouleau de formage plat,
c) après quoi la première partie d'ébauche réalisée en couche de dos
- est coupée de son tambour d'assemblage (12), retournée ou repliée et collée avec un profilé intérieur pourvu d'une bande de caoutchouc entourant la zone de coupe pour obtenir un anneau et
- est positionnée autour de deux tambours de vulcanisation (19, 20) pouvant être écartés et pourvus d'un profil extérieur complémentaire de manière à ce qu'elle entoure les deux tambours de vulcanisation et vienne en appui sur des parties de leur périphérie,
d) le composite de couches (21) de la deuxième partie d'ébauche étant poussé ou positionné sur la première partie d'ébauche entourant déjà les tambours de vulcanisation mobiles,
e) après quoi les tambours de vulcanisation (19, 20) sont écartés et les deux parties d'ébauche placées autour des tambours de vulcanisation sont vulcanisées l'une avec l'autre sous une bande de pression (22) pour former un composite de courroies trapézoïdales
f) et après la vulcanisation, le composite de courroies trapézoïdales étant séparé en courroies trapézoïdales individuelles ou en courroies trapézoïdales composites formées d'au moins deux courroies trapézoïdales disposées côte à côte.

2. Procédé selon la revendication 1, dans lequel, lors de la fabrication de la première partie d'ébauche, le profilé de courroie trapézoïdale ou le rouleau de formage profilé (14) sont conçus de telle sorte que la distance « e » entre les lignes médianes de deux profilés de courroie trapézoïdale adjacents soit supérieure à 10 mm.

3. Procédé selon la revendication 1 ou 2, dans lequel, lors de la fabrication de la première partie d'ébauche, les couches de caoutchouc non vulcanisées sont enroulées sous l'action de la chaleur sur le tambour d'assemblage (12).

4. Procédé selon la revendication 3, dans lequel les couches de caoutchouc ont une épaisseur maximale de 1,5 mm.

5. Procédé selon l'une des revendications 1 à 4, dans lequel, lors de la fabrication de la deuxième partie d'ébauche, le composite de couches de la deuxième partie d'ébauche est enroulé et/ou pressé sous l'action de la chaleur sur le tambour d'assemblage (16).

6. Procédé selon l'une des revendications 1 à 5, dans lequel, après la séparation du composite de courroies trapézoïdales en courroies trapézoïdales individuelles ou en courroies trapézoïdales composites (1), un scellage chimique des bords coupés est effectué, en particulier par application d'isocyanate.

7. Utilisation d'une courroie trapézoïdale ou d'une courroie trapézoïdale composite (1) formée d'au moins deux courroies trapézoïdales (6, 7, 8) disposées l'une à côté de l'autre, fabriquées selon l'une des revendications 1 à 6, dans lesquelles le tissu (10, 11) est formé sur le dos de la courroie et/ou sur le côté profilé sous la forme d'un tissu continu sur toute la largeur de la courroie trapézoïdale composite, pour des entraînements par courroie dans des véhicules ou machines agricoles.
